(19) **Europäisches Patentamt**
**European Patent Office**
**Office européen des brevets**

(11) **EP 1 998 393 B1**

(12) **EUROPEAN PATENT SPECIFICATION**

(45) Date of publication and mention
of the grant of the patent:
**08.08.2012 Bulletin 2012/32**

(51) Int Cl.:
***H01M 8/02*** *(2006.01)* ***H01M 8/10*** *(2006.01)*

(21) Application number: **07738825.4**

(86) International application number:
**PCT/JP2007/055380**

(22) Date of filing: **16.03.2007**

(87) International publication number:
**WO 2007/119398 (25.10.2007 Gazette 2007/43)**

(54) **ELECTROLYTE MEMBRANE AND SOLID POLYMER FUEL CELL**

ELEKTROLYTMEMBRAN UND FESTSTOFFPOLYMER-BRENNSTOFFZELLE

MEMBRANE ÉLECTROLYTIQUE ET PILE À COMBUSTIBLE À POLYMÈRE SOLIDE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.03.2006 JP 2006077457**

(43) Date of publication of application:
**03.12.2008 Bulletin 2008/49**

(73) Proprietor: **W.L. Gore & Associates, Co., Ltd.
Tokyo 108-0075 (JP)**

(72) Inventors:
• **SUZUKI, Takeyuki
Tokyo 156-8505 (JP)**
• **FUJIMOTO, Hiroyoshi
Tokyo 156-8505 (JP)**

(74) Representative: **Shanks, Andrew et al
Marks & Clerk LLP
Aurora
120 Bothwell Street
Glasgow
G2 7JS (GB)**

(56) References cited:
**EP-A2- 1 217 680 WO-A1-2004/030132
JP-A- 2003 263 998 JP-A- 2005 044 610
JP-A- 2006 054 080 JP-A- 2006 059 672
JP-A- 2006 172 765**

• **DATABASE WPI Week 200525 Thomson Scientific, London, GB; AN 2005-236042 XP002564452 & JP 2005 044610 A (TOYOBO KK) 17 February 2005 (2005-02-17)**

**Description**

TECHNICAL FIELD

The present invention relates to an electrolyte membrane to be used for a solid polymer fuel cell.

BACKGROUND ART

In solid polymer fuel cells, a fuel gas (hydrogen or the like) is supplied to one side and an oxidizing gas (air or the like) are supplied to the other face of a polymer electrolyte membrane on which electrodes are laminated and they are reacted to take electricity.

Generally, as the ion exchange capacity of an electrolyte membrane is higher, the proton conductivity becomes higher and the electric resistance becomes lower. However, on the other hand, the electrolyte membrane tends to contain water and be easily swollen to result in significant size alteration and mechanical strength decrease. To keep balance thereof, electrolyte membranes with an ion exchange capacity of 0.9 meq/g (that is, equivalent weight (EW) of about 1100 g/eq) to 1.1 meq/g (EW of about 900 g/eq) have been employed.

To further improve the mechanical strength of electrolyte membranes, it has been proposed to reinforce the electrolyte membranes with porous membranes (e.g. JP-A-HII(1999)-501964, JP-A-2000-510510 and the like). In JP-A-H11(1999)-501964, an electrolyte membrane with 0.91 meq/g (EW of 1100 g/eq) is reinforced with a porous membrane. In JP-A-2000-510510, electrolyte membranes with about 0.67 to 1.05 meq/g (EW of 950 to 1500 g/eq) are reinforced with porous membranes.

On the other hand, in recent years, electrolyte membranes hard to be hydrated although having a high ion exchange capacity have been developed (e.g., JP-A-2005-511830). In Examples of JP-A-2005-511830, it is substantially described that the ion exchange capacity can be increased to about 1.16 to 1.43 meq/g (EW of 698 to 862 g/eq).

On the other hand, JP-A-H10(1998)-79257 discloses that decrease of membrane strength due to humidification can be prevented and at the same time high output can be achieved in the case that an electrolyte membrane (ion exchange membrane) is made to have a three-layer structure and the ion exchange capacity of an ion exchange membrane in the inner layer is made higher than that in the outer layer. Specifically, in the case of using an ion exchange membrane with an ion exchange capacity of 0.92 meq/g (EW of 1090 g/eq) for the outer layer, ion exchange membranes with an ion exchange capacity of 1.67 to 2.35 meq/g (EW of 430 to 600 g/eq) are used for the inner layer.

However, according to the investigations carried out by the inventors of the present invention, it is found that although the output capabilities of the electrolyte membranes can certainly be increased by the method described in JP-A-H10(1998)-79257, the improvement is extremely slight. Particularly, it is found that although improvement is slightly observed in the case of operation under low humidified conditions, the output capabilities are scarcely improved in the case of high output operation even in low humidified conditions.

The present invention was made in view of the above-mentioned various circumstances, and an object thereof is to provide an electrolyte membrane that can provide both of output performance and durability at a high level, and a solid polymer fuel cell using the electrolyte membrane.

DATABASE WPI Week 200525 Thomson Scientific, London, GB; AN 2005-236042XP002564452 & JP2005 044610A (Toyobo KK) discloses a composite ion exchange member with a support material.

EP1217680 (Japan Gore Tex, Inc.) discloses an ion exchange and electrode assembly for an electrochemical cell.

DISCLOSURE OF THE INVENTION

The inventors of the present invention have made investigations to solve the above-mentioned problems and have found that the output performance can significantly be improved by increasing the ion exchange capacity of an inner layer in the case that a part of a layer (particularly the inner layer) is reinforced with a porous body, whereas, as described in JP-A-H10(1998)-79257, the output performance is slightly improved by increasing the ion exchange capacity of a part of layer (particularly the inner layer) without reinforcement by the porous body and the finding has led to completion of the invention.

That is, an electrolyte membrane for a solid polymer fuel cell according to claim 1 is characterized in that it is a laminated body of (1) a first layer comprising an ion exchange resin and (2) second layer comprising a porous body and an ion exchange resin filled into the fine pores of the porous body, and that the ion exchange capacity of the ion exchange resin for the second layer is higher than the ion exchange capacity of the ion exchange resin for the first layer.

It is preferable that the first layer and the second layer are reciprocally laminated and the outermost layer is the first layer. A difference of the ion exchange capacity of the ion exchange resin for the second layer and the ion exchange capacity of the ion exchange resin for the first layer is, for example, 0.05 meq/g or higher. The ion exchange capacity of the ion exchange resin for the first layer is preferably 1.0 to 1.3 meq/g and the ion exchange capacity of the ion exchange resin for the second layer is preferably 1.15 meq/g or higher.

As the above-mentioned ion exchange resins, perfluoroalkylsulfonic acid resins may be used. As the above-mentioned porous body, those having a porosity of 50 to 95%, an average pore diameter of 0.05 to 10 $\mu$m, and a weight per unit surface area of 2 to 20 g/m$^2$ can be employed and a porous polytetrafluoroethylene can be preferably used. A tensile strength of the porous body is, for example, 5 to 100 MPa.

A thickness of the first layer is, for example, 0.1 to 30 $\mu$m and a thickness of the second layer is, for example, 1 to 50 $\mu$m and a thickness of the electrolyte membrane is, for example, 5 to 100 $\mu$m.

The invention also includes a solid polymer fuel cell using the above-mentioned electrolyte membrane.

BRIEF DESCRIPTION OF THE DRAWINGS

Fig. 1 is a schematic cross-sectional view showing one example of an electrolyte membrane of the invention.
Fig. 2 is a schematic cross-sectional view showing another example of an electrolyte membrane of the invention.
Fig. 3 is a graph showing electric power generation characteristic of electrolyte membranes obtained in Examples and Comparative Examples under highly humidified conditions.
Fig. 4 is a graph showing electric power generation characteristic of electrolyte membranes obtained in Examples and Comparative Examples under low humidified conditions.

BEST MODE FOR CARRYING OUT THE INVENTION

Hereinafter, an electrolyte membrane of the invention will be described more in detail with reference to drawings.

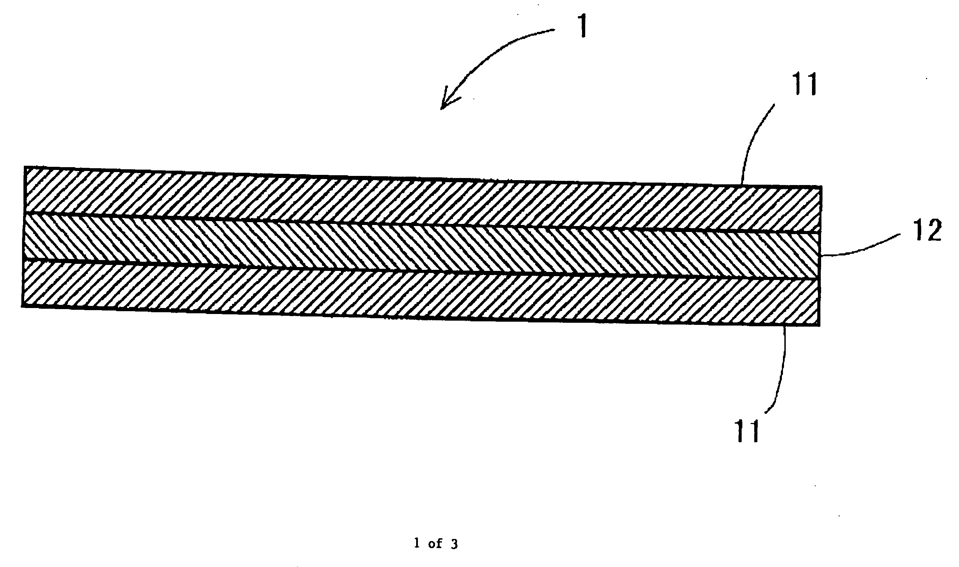

Fig. 1 is a schematic cross-sectional view showing one example of an electrolyte membrane of the invention. The electrolyte membrane 1 of Fig. 1 is composed by laminating an ion exchange resin membrane (a first layer; hereinafter sometimes simply referred to as ion exchange resin membrane) 11 which is not reinforced with a porous membrane on both faces of a layer (a second layer; hereinafter sometimes referred to as reinforced layer) 12 of an ion exchange resin reinforced with a porous membrane. To say more accurately, the reinforced layer 12 is a porous body of which the fine pores are filled with an ion exchange resin. The ion exchange capacity of the ion exchange resin for the reinforced layer 12 is higher than the ion exchange capacity of the ion exchange resin membrane 11. If the reinforced layer and ion exchange resin membrane are laminated and the ion exchange capacity of the reinforced layer is made higher, both of output performance and durability can be simultaneously achieved at a high level. The reason for that is unclear; however, it is supposed that the ion exchange resin with a high ion exchange capacity is excellent in the penetration (impregnation) into the reinforcing material (porous body). That is, when a coating solution of an ion exchange resin is prepared for impregnation of the reinforcing material (the porous body) with the coating solution, as the ion exchange capacity is higher, the ion exchange resin is easier to be dissolved in a solvent (e.g., alcohols such as ethanol and propanol, and alcohol-water mixed solvents) and the viscosity of the solution becomes lower. As a result, the ion exchange resin can be packed at a high filling ratio at the time of impregnation of the reinforcing material (porous body). In general, it is thought that if a porous body is used, the durability is improved and on the contrary, the output performance is decreased; however, if an ion exchange resin with a high ion exchange capacity is used, we suppose that since the filling ratio of the ion exchange resin is increased, durability can be improved while the high output performance is kept as it is with scarce deterioration of the output performance.

In the present invention, the order of lamination and the number of lamination are not particularly limited as long as the ion exchange resin membrane 11 with a relatively low ion exchange capacity and the reinforced layer 12 with a relatively high ion exchange capacity are laminated, however, it is recommended to use the ion exchange resin membrane 11 in one or both of the outermost layers of the electrolyte membrane. If the ion exchange resin membrane 11 with a low ion exchange capacity is used for the outermost layers, swelling of the electrolyte membrane with water can be prevented to a high extent. In a particularly preferable electrolyte membrane, two or more ion exchange resin membranes 11 and one or more reinforced layer 12 are reciprocally laminated and the ion exchange resin membranes 11 compose the outermost layers in both of the front and rear faces.

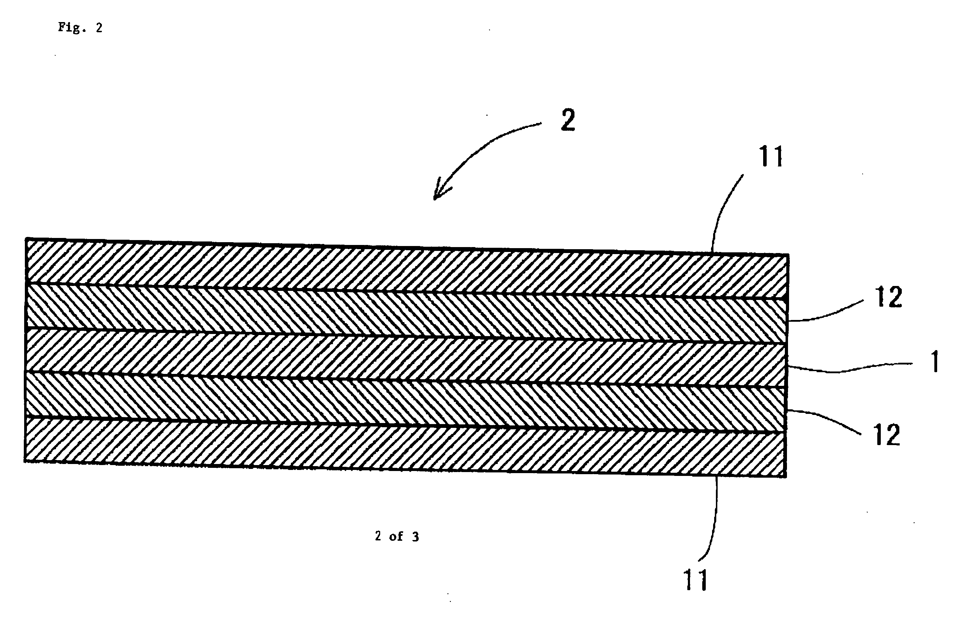

Fig. 2 is a schematic cross-sectional view showing an example of an electrolyte membrane using the ion exchange resin membrane 11 in the outermost layers of both of the front and rear faces. In the electrolyte membrane 2, the ion exchange resin membranes 11 and the reinforced layers 12 are reciprocally laminated in the total of 5 layers. The number of the layers may be an odd number of 7 or higher. If it is an odd number, the ion exchange resin membranes 11 can be used in the outermost layers of both of the front and rear faces.

A difference of the ion exchange capacity of the ion exchange resin for the reinforced layer 12 and the ion exchange capacity of the ion exchange resin of the ion exchange resin membrane 11 (= former - latter) $D_{IEC}$ is, for example, 0.05 meq/g or higher (e.g., about 0.07 to 1.2 meq/g, preferably about 0.1 to 0.5 meq/g, and further preferably about 0.1 to 0.3 meq/g). Both of the output performance and durability can be simultaneously achieved at a high level by making the ion exchange capacity of the reinforced layer 12 higher than that of the ion exchange resin membrane 11. Particularly, in the case that the ion exchange capacity of the ion exchange resin membrane 11 is low, it is recommended that the difference $D_{IEC}$ is made large. For example, the following are recommended: in the case that the ion exchange capacity of the ion exchange resin membrane 11 is about 0.7 to 0.85 meq/g, the difference $D_{IEC}$ is adjusted to be 0.2 meq/g or higher (particularly, about 0.2 to 0.4 meq/g), in the case that the ion exchange capacity of the ion exchange resin membrane 11 is about 0.85 to 1.0 meq/g, the difference $D_{IEC}$ is adjusted to be about 0.1 meq/g or higher (particularly, about 0.1 to 0.3 meq/g), and in the case that the ion exchange capacity of the ion exchange resin membrane 11 is about 1.0 to 1.3 meq/g, the difference $D_{IEC}$ is adjusted to be about 0.05 meq/g or higher (particularly, about 0.05 to 0.2 meq/g).

An ion exchange capacity of the ion exchange resin to be used for the ion exchange resin membrane 11 is, for example, about 0.7 to 1.3 meq/g, preferably 0.9 to 1.2 meq/g, and further preferably 1.0 meq/g or higher and less than 1.15 meq/g.

On the other hand, an ion exchange capacity of the ion exchange resin to be used for the reinforced layer 12 is not particularly limited as long as it is higher than that of the ion exchange resin 11 and the above-mentioned difference $D_{IEC}$ preferably satisfies the prescribed value and for example, it may be selected from a range of 1.15 meq/g or higher, preferably 1.18 meq/g or higher, and further preferably 1.2 meq/g or higher. In the case that the ion exchange capacity of the reinforced layer 12 is about 1.1 meq/g (EW of 900 g/eq), if the ion exchange resin is reinforced with a porous membrane, the output performance is considerably lowered, and on the other hand, as the ion exchange capacity becomes higher (e.g., in the case of 1.15 meq/g or higher, particularly 1.2 meq/g or higher), even if the ion exchange resin is reinforced with a porous membrane, the output performance is scarcely lowered. The upper limit of the ion exchange capacity is not particularly limited, however, it is e.g. about 2 meq/g, preferably about 1.7 meq/g, more preferably about 1.5 meq/g, and even more preferably about 1.3 meq/g.

As the ion exchange resin, known various kinds of ion exchange resins (e.g. non-fluororesin type ion exchange resins, fluororesin type ion exchange resins and the like) can be used as long as they can achieve the above-mentioned ion exchange capacity. The non-fluororesin type ion exchange resins may include polyalkylene oxide, poly(vinyl alcohol), and styrene-divinylbenzene type ion exchange resins and their metal salts (e.g., polyalkylene oxide-alkali metal salt composites (particularly, resins obtained by polymerization of ethylene oxide oligomers in the co-existence of an alkali metal salt such as lithium chlorate)). The fluororesin type ion exchange resins may include perfluorosulfonic acid resins (perfluoroalkylsulfonic acid resins), perfluorocarboxylic acid resins, and the like. Preferable ion exchange resins are fluororesin type ion exchange resins (particularly perfluoroalkylsulfonic acid resins).

In the present invention, since an ion exchange resin with a high ion exchange capacity is used for the reinforced layer 12, the water-proofness of the resin is lowered. Therefore, use of an ion exchange resin having a high ion exchange capacity and hard to be hydrated is recommended for the reinforced layer 12 (e.g., the ion exchange resins (particularly perfluoroalkylsulfonic acid resins) disclosed in JP-A-2005-511830). The apparent characteristic of this ion exchange resin is its production method: that is, the method involves carrying out high shearing and mixing to form oil droplets with a sub-micron size at the time of emulsion polymerization of a monomer having a group changeable to an ion exchange group (sulfonic acid group or the like) (e.g., a perfluoromonomer having a $SO_2F$ group and a polymerizable ethylene group) and tetrafluoroethylene gas in the presence of water, an oil type solvent (perfluorohydrocarbon or the like) and a surfactant. The average colloidal particle diameter of the obtained copolymer is extremely small and, for example, about 250 nm or smaller (particularly about 100 to 200 nm).

The average colloidal particle diameter can be measured using a laser light scattering submicron particle size analyzer manufactured by Brookhaven Instrument Corporation (BIC). More particularly, an emulsion of a copolymer is diluted with deionized water to adjust the concentration of the copolymer to be 1 to 50% by mass, the obtained emulsion is set in a regular tetragonal acrylic cell standardized by BIC and attached to the measurement instrument, and the average particle diameter is measured Laser beam is radiated to the cell at a scattering angle of 90 degrees and the average particle diameter reported by 90 Plus Particle Sizing Software is employed as the average colloidal particle diameter.

The above-mentioned copolymer becomes an ion exchange resin by changing the group changeable to an ion exchange group by proper means (e.g., hydrolysis or the like) to the ion exchange group.

The porous body (the porous membrane) for the reinforced layer 12 can be produced by foaming a resin and thus forming continuous cells and also eluting island parts of a resin with a sea-island structure having continuous island parts. Further, the porous structure can be formed by drawing (expanding) in accordance with the characteristics of the resin. The porous body (porous membrane) may be a non-fluororesin type porous body (porous membrane), however it is preferably a fluororesin type porous body (porous membrane), particularly, a porous body made of a polytetrafluoroethylene (porous polytetrafluoroethylene).

A porous polytetrafluoroethylene (PTFE) membrane can be produced by drawing (expanding) a PTFE resin sheet obtained by extruding a paste and the detail is disclosed in JP-B-S51(1976)-18991. The drawing (expanding) may be carried out by uniaxial or biaxial drawing (expanding) . A uniaxially expanded porous PTFE resin can be characterized in that there are fine island-like nodes (folded crystals) approximately at right angles to the drawing (expanding) direction in a micro view and chick blind-like fibrils (linear molecule bundles formed by dissolving and pulling out the above-mentioned folded crystals by the drawing (expanding)) connecting these nodes are oriented in the drawing (expanding) direction. Further, a biaxially expanded porous PTFE resin can be characterized in that fibrils are spread radially and nodes connecting the fibrils are spotted like islands and there are many spaces defined by the fibrils and nodes to form a spider's nest-like fibrous structure in a micro view.

As the porosity and average pore diameter of the porous body become higher, it becomes easier to increase the content of the ion exchange resin but simultaneously the mechanical strength is lowered. Accordingly, the porosity and average pore diameter of the porous body can be determined from a viewpoint of the balance of the content (output property) and mechanical strength (durability). A porosity of the porous body is, for example, about 50% or higher (preferably 60% or higher and more preferably 70% or higher) and about 95% or lower (preferably 93% or lower and more preferably 90% or lower). Further, an average pore diameter of the porous body is, for example, about 0.05 to 10 $\mu$m, preferably about 0.1 to 5 $\mu$m, and more preferably about 0.2 to 1 $\mu$m.

The above-mentioned porosity can be calculated according to the following equation using a bulk density D (D = W/V: unit is g/cm$^3$) calculated by measuring the weight W of the porous body and the apparent volume V including the void parts and the density with no void formation at all (true density) $D_{standard}$ (2.2 g/cm$^3$ in the case of PTFE resin).

$$\text{Porosity (\%)} = [1 - (D / D_{standard})] \times 100$$

The average pore diameter can be measured using a Coulter Porometer manufactured by Coulter Electronics.

A ratio of the porous body (porous membrane) and the ion exchange resin which is filled into the pores of the porous body can be determined from a viewpoint of the balance of the output property and durability. As the ratio of the porous body is higher, the durability is improved more and as the ratio of the ion exchange resin is higher, the output performance is improved more. A ratio of the porous body and the filled ion exchange resin (porous body/filled ion exchange resin) can be selected from a range of, for example, about 2/98 to 50/50 (mass ratio), preferably about 5/95 to 40/60 (mass ratio), and more preferably about 10/90 to 35/65 (mass ratio).

A tensile strength of the porous body (porous membrane) is, for example, about 5 to 100 MPa, preferably about 10 to 75 MPa, and more preferably about 15 to 75 MPa. As the tensile strength of the porous body is higher, the creep can be made smaller and the durability can be improved to be higher.

A weight per unit surface area of the porous body (porous membrane) is, for example, about 2 to 20 g/m$^2$, preferably about 3 to 10 g/m$^2$, and more preferably about 4 to 8 g/m$^2$. As the weight per unit surface area is higher, it becomes easier to improve the strength (durability) of the electrolyte membrane and as the weight per unit surface area is lower, it becomes easier to improve the output property of the electrolyte membrane.

The porous body may be subjected to surface treatment (e.g., corona discharge treatment, plasma treatment, or the like) as necessary. If corona discharge treatment, plasma treatment, or the like is carried out, adhesiveness of the porous body and the ion exchange resin can be heightened.

A thickness of the reinforced layer (porous membrane) 12 is, for example, about 1 to 50 $\mu$m, preferably about 5 to 30 $\mu$m, and more preferably about 10 to 20 $\mu$m. As it is thicker, it becomes easier to improve the strength (durability) of the electrolyte membrane and as it is thinner, it becomes easier to improve the output property of the electrolyte membrane.

On the other hand, a thickness of the ion exchange resin membrane 11 may be selected from a range of, for example, about 0.1 to 30 $\mu$m, preferably about 0.5 to 20 $\mu$m, and more preferably about 1 to 10 $\mu$m. Further, a thickness of the electrolyte membrane is, for example, about 5 to 100 $\mu$m, preferably about 7 to 70 $\mu$m, and more preferably about 10 to 50 $\mu$m.

The ion exchange resin membrane 11 may be reinforced by a filler or the like as necessary.

According to the invention, in the ion exchange membrane composed of a layer (the first layer) not reinforced by a porous body and a layer (the second layer) reinforced by a porous body, sine the ion exchange capacity of the ion exchange resin for the reinforced layer (the second layer) is made high, both of the output performance and durability can be achieved at a high level. Particularly, the output performance and durability at the time of high output operation under low humidified conditions can be simultaneously achieved at a high level.

EXAMPLES

Hereinafter, the invention will be described more substantially with reference to Examples, however it is not intended that the invention be limited to the illustrated Examples. Modifications and substitutions to specific process conditions and structures can be made without departing from the spirit and scope of the invention. Accordingly, the invention includes such modifications and substitutions.

The following ion exchange resins were used for Examples and Comparative Examples.

(1) Ion exchange resinA (IEC = 1.09 meq/g, EW = 920 g/eq)

After 14900 g of deionized water, 375 g of an aqueous solution of 20% by mass of perfluorooctanoic acid ammonium salt, 1200 g of $CF_2=CF-O-CF_2CF(CF_3)-O-CF_2CF_2SO_2F$ monomer, and 300 g of a perfluorohydrocarbon (trade name "Fluorinert FC-77", manufactured by 3M Ltd.) were mixed, the mixed liquid was passed through a homogenization module of a Micro-Fluidizer in total of six times using an air motor using compresses air of about 276 kPa (40 psi) to obtain a water-based mini-emulsion. The water-based mini-emulsion was a semi-transparent liquid with extremely pale blue. Next, the water-based mini-emulsion was added to a 4 L-reaction vessel and the reaction vessel was opened three times and the inside was purged with tetrafluoroethylene gas every time. The oxygen content in the aqueous solution was about 20 ppm immediately before the introduction of tetrafluoroethylene gas. Then, the water-based mini-emulsion was transferred to a 30 L-pressurized reaction vessel and the reaction vessel was opened three times and the inside was purged with tetrafluoroethylene gas every time. The oxygen content in the aqueous solution was about 20 ppm immediately before the introduction of tetrafluoroethylene gas.

The stirring speed of the reaction vessel was set to be at 500 rpm through the entire reaction and the water-based mini-emulsion was heated at about 83°C. Tetrafluoroethylene gas was introduced into the pressurized reaction vessel and the pressure was increased to 1.5 MPa. After about 0.6 g of ammonium persulfate was dissolved in 100 ml of deionized water and 400 ml of deionized water was further added, the obtained solution was sent to the reaction vessel by a pump to initiate a reaction. The reaction temperature was kept at 82 to 84°C through the entire polymerization. After the pressure of tetrafluoroethylene was kept at about the initial value for about 70 minutes, the supply of tetrafluoroethylene was stopped. In the state that tetrafluoroethylene supply to the reaction vessel was stopped, the reaction was continued further for about 95 minutes. The reaction pressure gradually decreased to 0.55 MPa from 1.5 MPa for this 95 minutes. Next, the reaction temperature was lowered to less than 50°C and the reaction system was opened to the atmospheric air. The total weight of the obtained reaction mixed liquid (dispersion) was 18.4 kg, the polymer concentration was 11.5% by mass, and the average colloidal particle diameter was 195 nm.

The obtained dispersion was frozen at a temperature of about -5°C to break the emulsion and flocculate the polymer. After the thawing, the polymer agglomerates (polymer sponge) were recovered by filtration and washed with water and finely cut. Again the polymer agglomerates were washed with water and left in air to dry them to a certain extent and successively they were set in a vacuum oven purged with nitrogen and dried at a temperature of 85°C for 48 hours to obtain 2.1 kg of a product (precursor polymer).

The precursor polymer was put in 10 L of an aqueous solution in which 15% by mass of potassium hydroxide and 30% by mass of dimethyl sulfoxide were dissolved and the resulting solution was stirred at a temperature of 60°C for 4 hours to carry out alkali hydrolysis treatment. After the hydrolyzed polymer was recovered by filtration and stirred in 2N hydrochloric acid at a temperature of 60°C for 3 hours, the hydrolyzed polymer was washed with ion exchanged water and dried (temperature of 85°C for 4 hours) to obtain 2.0 kg of a objective polymer.

(2) Ion exchange resin B (IEC = 1.25 meq/g, EW = 800 g/eq)

After 14900 g of deionized water, 375 g of an aqueous solution of 20% by weight of perfluorooctanoic acid ammonium salt, 1200 g of $CF_2=CF-O-CF_2CF(CF_3)-O-CF_2CF_2SO_2F$ monomer, and 300 g of a perfluorohydrocarbon (trade name "Fluorinert FC-77", manufactured by 3M Ltd.) were mixed, the mixed liquid was passed through a homogenization module of a Micro-Fluidizer in total of six times using an air motor using compresses air of about 276 kPa (40 psi) to obtain a water-based mini-emulsion. The water-based mini-emulsion was a semi-transparent liquid with extremely pale blue. Next, the water-based mini-emulsion was added to a 4 L-reaction vessel and the reaction vessel was opened three times and the inside was purged with tetrafluoroethylene gas every time. The oxygen content in the aqueous solution was about 20 ppm immediately before the introduction of tetrafluoroethylene gas. Then, the aqueous mini-emulsion was transferred to a 30 L-pressurized reaction vessel, and the reaction vessel was opened three times and the inside was purged with tetrafluoroethylene gas every time. The oxygen content in the aqueous solution was about 20 ppm immediately before the introduction of tetrafluoroethylene gas.

The stirring speed of the reaction vessel was set to be at 500 rpm through the entire reaction and the water-based mini-emulsion was heated at about 83°C. Tetrafluoroethylene gas was introduced into the pressurized reaction vessel and the pressure was increased to 1.2 MPa. About 0.6 g of ammonium persulfate was dissolved in 100 ml of deionized water and 400 ml of deionized water was further added, the obtained solution was then sent to the reaction vessel by a pump to initiate a reaction. The reaction temperature was kept at 82 to 84°C through the entire polymerization.

After the pressure of tetrafluoroethylene was kept at about the initial value for about 60 minutes, the supply of tetrafluoroethylene was stopped. In the state that tetrafluoroethylene supply to the reaction vessel was stopped, the reaction was continued further for about 65 minutes. The reaction pressure gradually decreased to 0.60 MPa from 1.2 MPa for those 65 minutes. Next, the reaction temperature was lowered to less than 50°C and the reaction system was opened to the atmospheric air. The total weight of the obtained reaction mixed liquid (dispersion) was 17.7 kg, the polymer concentration was 9.3% by mass, and the average colloidal particle diameter was 163 nm.

The obtained dispersion was frozen at a temperature of about -5°C to break the emulsion and flocculate the polymer. After the thawing, the polymer agglomerates (polymer sponge) were recovered by filtration and washed with water and finely cut. Again the polymer agglomerates were washed with water and left in air to dry them to a certain extent and successively they were set in a vacuum oven purged with nitrogen and dried at a temperature of 85°C for 48 hours to obtain 1.6 kg of a product (precursor polymer).

The precursor polymer was put in 10 L of an aqueous solution in which 15% by mass of potassium hydroxide and 30% by mass of dimethyl sulfoxide were dissolved and the resulting solution was stirred at a temperature of 60°C for 4 hours to carry out alkali hydrolysis treatment. The hydrolyzed polymer was recovered by filtration and stirred in 2N hydrochloric acid at a temperature of 60°C for 3 hours, and the hydrolyzed polymer was then washed with ion exchanged water and dried (temperature of 85°C for 4 hours) to obtain 1.5 kg of a objective polymer.

Example 1

An ethanol solution of the ion exchange resin A (concentration of 15% by mass) was applied on a release film (ethylene-tetrafluoroethylene copolymer (ETFE) film) and dried (layer i, thickness of 3 $\mu$m).

A expanded porous PTFE membrane (manufactured by Japan Gore-Tex Inc., thickness of 10 $\mu$m, porosity of 70%, average pore diameter of 0.2 $\mu$m, tensile strength of 30 MPa, and weight per unit surface area of 6.5 g/m$^2$) was impregnated with an ethanol solution of the ion exchange resin B (concentration of 15% by mass) (expanded porous PTFE/filled ion exchange resin = 35/65 (mass ratio after drying). The impregnated membrane (hereinafter, referred to as impregnated membrane B) (layer ii) was laminated on the above-mentioned layer i and dried in a hot air blow oven.

A layer of the ion exchange resin A (layer iii, thickness of 4 $\mu$m) was formed on the layer ii in the same manner as the layer i. A layer of the impregnated membrane B (layer iv, thickness of 10 $\mu$m) was formed on the layer iii in the same manner as the layer ii. Further, a layer of the ion exchange resin A (layer v, thickness of 3 $\mu$m) was formed on the layer iv in the same manner as the layer i.

The electrolyte membrane obtained in the above-mentioned manner was a membrane having a total thickness of 30 $\mu$m and a five-layer structure of the layer of the ion exchange resin A (layer i, thickness of 3 $\mu$m)/the layer of the impregnated membrane B (layer ii, thickness of 10 $\mu$m)/ the layer of the ion exchange resin A (layer iii, thickness of 4 $\mu$m)/the layer of the impregnated membrane B (layer iv, thickness of 10 $\mu$m)/ the layer of the ion exchange resin A (layer v, thickness of 3 $\mu$m).

The thicknesses were values measured using a thickness meter (1/1000 mm Dial Thickness Gauge; manufactured by Teclock Co., Ltd.) (hereinafter the same as above).

Comparative Example 1

A expanded porous PTFE membrane (manufactured by Japan Gore-Tex Inc., thickness of 10 $\mu$m, porosity of 70%, average pore diameter of 0.2 $\mu$m, tensile strength of 30 MPa, and weight per unit surface area of 6.5 g/m$^2$) was impregnated with an ethanol solution of the ion exchange resin A (concentration of 15% by mass) (expanded porous PTFE/filled ion exchange resin = 35/65 (mass ratio after drying). The same process as that of Example 1 was carried out, except that this impregnated membrane (hereinafter, referred to as impregnated membrane A) was used for the layer ii and layer iv.

The electrolyte membrane obtained in the above-mentioned manner was a membrane having a total thickness of 30 $\mu$m and a five-layer structure of the layer of the ion exchange resin A (layer i, thickness of 3 $\mu$m)/the layer of the impregnated membrane A (layer ii, thickness of 10 $\mu$m)/ the layer of the ion exchange resin A (layer iii, thickness of 4 $\mu$m)/the layer of the impregnated membrane A (layer iv, thickness of 10 $\mu$m)/ the layer of the ion exchange resin A (layer v, thickness of 3 $\mu$m).

Comparative Example 2

An ethanol solution of the ion exchange resin B (concentration of 15% by mass) was applied on a release film (ethylene-tetrafluoroethylene copolymer (ETFE) film) and dried (layer i, thickness of 3 $\mu$m).

The impregnated membrane B (layer ii) was laminated on the layer i and dried in a hot air blow oven.

A layer of the ion exchange resin B (layer iii, thickness of 4 $\mu$m) was formed on the layer ii in the same manner as the layer i. A layer of the impregnated membrane B (layer iv, thickness of 10 $\mu$m) was formed on the layer iii in the same manner as the layer ii. Further, a layer of the ion exchange resin B (layer v, thickness of 3 $\mu$m) was formed on the layer iv in the same manner as the layer i.

The electrolyte membrane obtained in the above-mentioned manner was a membrane having a total thickness of 30 $\mu$m and a five-layer structure of the layer of the ion exchange resin B (layer i, thickness of 3 $\mu$m)/the layer of the impregnated membrane B (layer ii, thickness of 10 $\mu$m)/ the layer of the ion exchange resin B (layer iii, thickness of 4 $\mu$m)/the layer of the impregnated membrane B (layer iv, thickness of 10 $\mu$m)/ the layer of the ion exchange resin B (layer v, thickness of 3 $\mu$m).

Comparative Example 3

An ethanol solution of the ion exchange resin A (concentration of 15% by mass) was applied on a release film (ethylene-tetrafluoroethylene copolymer (ETFE) film) and dried (thickness of 30 $\mu$m).

Comparative Example 4

An ethanol solution of the ion exchange resin B (concentration of 15% by mass) was applied on a release film (ethylene-tetrafluoroethylene copolymer (ETFE) film) and dried (thickness of 30 $\mu$m).

Comparative Example 5

An ethanol solution of the ion exchange resin A (concentration of 15% by mass) was applied on a release film (ethylene-tetrafluoroethylene copolymer (ETFE) film) and dried (layer i, thickness of 3 $\mu$m).

An ethanol solution of the ion exchange resin B (concentration of 15% by mass) was applied on the layer i and dried (layer ii, thickness of 10 $\mu$m).

Next, an ethanol solution of the ion exchange resin A (concentration of 15% by mass) was applied on the layer ii and dried (layer iii, thickness of 4 $\mu$m).

Further, an ethanol solution of the ion exchange resin B (concentration of 15% by mass) was applied on the layer iii and dried (layer iv, thickness of 10 $\mu$m).

Successively, an ethanol solution of the ion exchange resin A (concentration of 15% by mass) was applied on the layer iv and dried (layer v, thickness of 3 $\mu$m).

The electrolyte membrane obtained in the above-mentioned manner was a membrane having a total thickness of 30 $\mu$m and a five-layer structure of the layer of the ion exchange resin A (layer i, thickness of 3 $\mu$m)/the layer of the ion exchange resin B (layer ii, thickness of 10 $\mu$m)/ the layer of the ion exchange resin A (layer iii, thickness of 5 $\mu$m) /the layer of the ion exchange resin B (layer iv, thickness of 10 $\mu$m)/ the layer of the ion exchange resin A (layer v, thickness of 3 $\mu$m).

The characteristics of the electrolyte membranes obtained in Examples and Comparative Examples were evaluated as follows.

1) Electric power generation performance

A platinum-bearing carbon electrode (registered trade name "PRIMEA" 5510, manufactured by Japan Gore-Tex Inc., platinum deposition amount: 0.3 mg/cm$^2$, size 5 cm $\times$ 5 cm) was laminated on both faces of each electrolyte membrane and a gas diffusion layer (registered trade name "Car Bell CL", manufactured by Japan Gore-Tex Inc., size 5 cm $\times$ 5 cm) was laminated further on both faces in the outside. Each of the obtained laminated bodies was mounted on a single cell for a fuel cell having an active area of 5 cm $\times$ 5 cm and a hydrogen gas controlled to give a prescribed dew point was supplied to the anode side and air controlled to give a prescribed dew point was supplied to the cathode side to measure the electric power generation performance.

The measurement of the electric power generation performance was carried out in two conditions; a highly humidified condition and a low humidified condition. In the highly humidified condition, the cell temperature was set at 80°C and the dew point of hydrogen gas and air was controlled to be 80°C (relative humidity was controlled to be 100% RH). In the low humidified condition, the cell temperature was set at 80°C and the dew point of hydrogen gas and air was controlled to be 54.9°C (relative humidity was controlled to be 30% RH).

Further, the cell voltage was investigated in the case of operation at high output (current density of 1.2 A/cm$^2$) in the low humidified condition (80°C, 30% RH).

2) Proton conductivity

Each electrolyte membrane was immersed in pure water at a temperature of 25°C. The electrolyte membrane sufficiently impregnated with water was pressed to platinum wires at 10 mm interval to measure the impedance between the platinum wires. The measurement was carried out three times and the average value was employed.

3) Durability (accelerated life test)

The same fuel cells (single cells) as those for the above-mentioned electric power generation performance were produced and continuously operated in conditions of a cell temperature of 95°C, a relative humidity of a hydrogen gas and air of 75% RH, and an electric current density of 0.5 A/cm$^2$ to measure the time until the operation became impossible.

4) Property of resistance to dissolution in hot water

Each electrolyte membrane cut in 10 cm × 10 cm was immersed in 500 g of water heated to a temperature of 120°C in a pressure resistant container and left for 30 minutes. The weights before and after the immersion were measured to calculate the weight alteration ratio according to the following equation. The measurement was repeated three times and the average value was employed.

$$\textbf{Weight alteration ratio (\%) = W2/W1} \times \textbf{100}$$

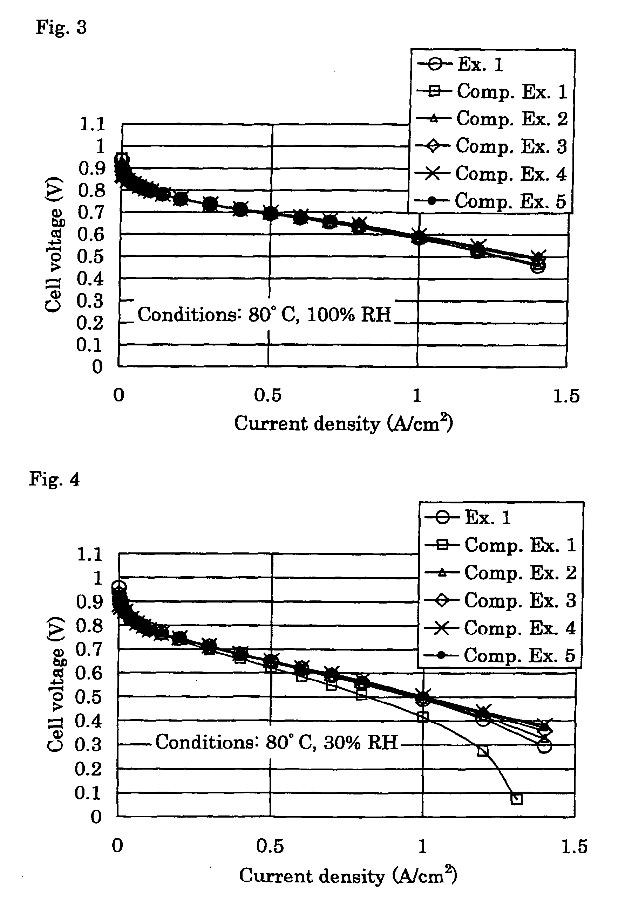

(wherein, W1 denotes the dry weight of the electrolyte membrane before immersion in hot water and W2 denotes the dry weight of the electrolyte membrane after immersion in hot water).
Results are shown in Table 1 and Figs. 3 and 4.
Table 1

| | | Example 1 | | Comparative Example 1 | | Comparative Example 2 | | Comparative Example 3 | | Comparative Example 4 | | Comparative Example 5 | |
|---|---|---|---|---|---|---|---|---|---|---|---|---|---|
| Layer i | | Ion exchange resin A 1,09meq/g EW920 | - | Ion exchange resin A 1.09meq/g EW920 | - | Ion exchange resin B 1.25meq/g EW800 | - | Ion exchange resin A 1.09meq/g EW920 | - | Ion exchange resin B 1.25meq/g EW800 | - | Ion exchange resin A 1.09meq/g | - |
| Layer ii | | Ion exchange resin B 1.26meq/g EW800 | ePTFE reinforcement | Ion exchange resin A 1.09meq/g EW920 | ePTFE reinforcement | Ion exchange resin B 1.25meq/g EW800 | ePTFE reinforcement | Ion exchange resin A 1.09meq/g EW920 | - | Ion exchange resin B 1.25meq/g EW800 | - | EW920 Ion exchange resin B 1.25meq/g | - |
| Layer iii | | Ion exchange resin A 1.09meq/g EW920 | - | Ion exchange resin A 1.09meq/g EW920 | - | Ion exchange resin B 1.25meq/g EW800 | - | Ion exchange resin A 1.09meq/g EW920 | - | Ion exchange resin B 1.25meq/g EW800 | - | EW800 Ion exchange resin A 1.09meq/g | - |
| Layer iv | | Ion exchange resin B 1.25meq/g EW800 | ePTFE reinforcement | Ion exchange resin A 1.09meq/g EW920 | ePTFE reinforcement | Ion exchange resin B 1.26meq/g EW800 | ePTFE reinforcement | Ion exchange resin A 1.09meq/g EW920 | - | Ion exchange resin B 1.25meq/g EW800 | - | EW920 Ion exchange resin B 1.26meq/g EW800 | - |
| Layer v | | Ion exchange resin A 1.09meq/g EW920 | - | Ion exchange resin A 1.09meq/g EW920 | - | Ion exchange resin B 1.25meq/g EW800 | - | Ion exchange resin A 1.09meq/g EW920 | - | Ion exchange resin B 1.25meq/g EW800 | - | Ion exchange resin A 1.08meq/g EW920 | - |
| Electric power generation performance at the time of low humidification and high output | Voltage (mV) | 407 | | 275 | | 418 | | 429 | | 439 | | 435 | |
| | Relative value | 93% | | 63% | | 95% | | 98% | | 100% | | 99% | |

(continued)

| | Example 1 | Comparative Example 1 | Comparative Example 2 | Comparative Example 3 | Comparative Example 4 | Comparative Example 5 |
|---|---|---|---|---|---|---|
| Proton conductivity | 0.110 | 0.085 | 0.135 | 0.108 | 0.145 | 0.137 |
| Durability (accelerated life) | 2000hr or more | 2000hr or more | 1200hr | 600hr | 300hr | 0.137 500hr |
| Property of resistance to dissolution in hot water (% by mass) | 99.0 | 100.0 | 15.0 | 99.5 | 10.0 | 80.3 |

As being made clear by comparison of Comparative Example 3 and Comparative Example 5, if only the ion exchange capacity of the ion exchange resin layers as the inner layers is simply increased, only the electric power generation performance is slightly improved at the time of low humidification (see Figs. 3 and 4) and particularly in the case of high output operation, the improvement ratio of the electric power generation performance (voltage) is only as high as 1% (= 99/98 - 1) $\times$ 100) (see Table 1).

On the other hand, as being made clear by comparison of Comparative Example 1 and Example 1, if the ion exchange capacity of the ion exchange resin layers as the inner layers is increased in combination with reinforcement of the inner layers with the porous body, the improvement ratio of the electric power generation performance (voltage) is increased to no less than 48% (= 93/63 -1) $\times$ 100) (see Table 1).

In addition, as being made clear by comparison of Comparative Example 3 and Comparative Example 1, in the case that ion exchange capacity of the ion exchange resin is 1.09 meq/g, if the ion exchange resin is reinforced with the porous membrane, the electric power generation performance is considerably decreased and on the other hand, as being made clear by comparison of Comparative Example 4 and Comparative Example 2, in the case that ion exchange capacity of the ion exchange resin is 1.25 meq/g, even if the ion exchange resin is reinforced with the porous membrane, the electric power generation performance is scarcely decreased.

INDUSTRIAL APPLICABILITY

The electrolyte membrane of the present invention may be used as it is for a solid polymer fuel cell and also the electrolyte membrane of the invention may be used in form of a membrane electrode-bonded body by previously laminating the electrolyte membrane and a catalyst layer (and if necessary, diffusion layers) for a solid polymer fuel cell.

The fuel cell obtained in the above-mentioned manner can provide both of the high output performance and durability at a high level since the electrolyte membrane of the invention is used. Particularly, both of the output performance and durability can be achieved at a high level in operation under low humidified conditions (e.g., a relative humidity of the fuel gas and oxidizing agent gas of about 10 to 50% RH), and further preferably in operation at high output (e.g., a current density of about 1 to 1.5 A/cm$^2$).

**Claims**

1. An electrolyte membrane for a solid polymer fuel cell being a laminated body of (1) a first layer comprising an ion exchange resin and (2) a second layer comprising a porous body and an ion exchange resin filled into fine pores of the porous body, wherein an ion exchange capacity of the ion exchange resin for the second layer is higher than an ion exchange capacity of the ion exchange resin for the first layer by 0.05 meq/g or higher, and wherein the ion exchange resin is perfluoroalkysulfonic acid resin.

2. The electrolyte membrane according to claim 1, wherein the two or more first layers and the one or more second layers are reciprocally laminated, and the first layers compose the outermost layers in both of the front and rear faces.

3. The electrolyte membrane according to claim 1, wherein an ion exchange capacity of the ion exchange resin for the first layer is 1.0 to 1.3 meq/g.

4. The electrolyte membrane according to any one of claims 1 to 2, wherein an ion exchange capacity of the ion exchange resin for the second layer is 1.15 meq/g or higher.

5. The electrolyte membrane according to any one of claims 1 to 4 wherein a porosity of the porous body is 50 to 95%, an average pore diameter of the porous body is 0.05 to 10 $\mu$m, and a weight per unit surface area of the porous body is 2 to 20 g/m$^2$.

6. The electrolyte membrane according to any one of claims 1 to 5, wherein the porous body us a porous polytetraflourethylene.

7. The electrolyte membrane according to any one of claims 1 to 6 wherein a thickness of the first layer is 0.1 to 30 $\mu$m, a thickness of the second layer is 1 to 50 $\mu$m, and a thickness of the electrolyte membrane is 5 to 100 $\mu$m.

8. A solid polymer fuel cell using the electrolyte membrane according to any one of claims 1 to 7.

# EP 1 998 393 B1

**Patentansprüche**

1. Elektrolytmembran für eine Festpolymer-Brennstoffzelle, die aus einem laminierten Körper aus (1) einer ersten Schicht, die ein Ionenaustauschharz umfasst, und (2) einer zweiten Schicht besteht, die einen porösen Körper und ein Ionenaustauschharz umfasst, das in feine Poren des porösen Körpers eingefüllt ist, wobei ein Ionenaustauschvermögen des Ionenaustauschharzes für die zweite Schicht 0,05 mäq/g höher als ein Ionenaustauschvermögen des Ionenaustauschharzes für die erste Schicht oder noch höher ist, und wobei das Ionenaustauschharz Perfluoralkylsulfonsäureharz ist.

2. Elektrolytmembran nach Anspruch 1, wobei die zwei oder mehr ersten Schichten und die eine oder mehr zweiten Schichten reziprok laminiert sind und die ersten Schichten die äußersten Schichten sowohl auf der Vorder- als auch der Rückseite bilden.

3. Elektrolytmembran nach Anspruch 1, wobei ein Ionenaustauschvermögen des Ionenaustauschharzes für die erste Schicht 1,0 bis 1,3 mäq/g beträgt.

4. Elektrolytmembran nach einem der Ansprüche 1 bis 2, wobei ein Ionenaustauschvermögen des Ionenaustauschharzes für die zweite Schicht 1,15 mäq/g oder mehr beträgt.

5. Elektrolytmembran nach einem der Ansprüche 1 bis 4, wobei eine Porosität des porösen Körpers 50 bis 95 % beträgt, ein durchschnittlicher Porendurchmesser des porösen Körpers 0,05 bis 10 $\mu$m beträgt und ein Gewicht pro Einheitsoberflächenbereich des porösen Körpers 2 bis 20 g/m$^2$ beträgt.

6. Elektrolytmembran nach einem der Ansprüche 1 bis 5, wobei der poröse Körper ein poröses Polytetrafluorethylen ist.

7. Elektrolytmembran nach einem der Ansprüche 1 bis 6, wobei eine Dicke der ersten Schicht 0,1 bis 30 $\mu$m beträgt, eine Dicke der zweiten Schicht 1 bis 50 $\mu$m beträgt und eine Dicke der Elektrolytmembran 5 bis 100 $\mu$m beträgt.

8. Festpolymer-Brennstoffzelle, bei der die Elektrolytmembran nach einem der Ansprüche 1 bis 7 verwendet wird.

**Revendications**

1. Membrane électrolytique pour une pile à combustible à polymère solide qui est un corps stratifié de (1) une première couche comprenant une résine échangeuse d'ions et (2) une seconde couche comprenant un corps poreux et une résine échangeuse d'ions chargée dans de fins pores du corps poreux, une capacité d'échange d'ions de la résine échangeuse d'ions pour la seconde couche étant supérieure à une capacité d'échange d'ions de la résine échangeuse d'ions pour la première couche de 0,05 méq./g ou plus, et la résine échangeuse d'ions étant une résine d'acide perfluoroalkysulfonique.

2. Membrane électrolytique selon la revendication 1, dans laquelle les deux ou plusieurs premières couches et la une ou plusieurs seconde(s) couche(s) sont réciproquement stratifiées, et les premières couches composent les couches les plus extrêmes à la fois sur les faces frontale et arrière.

3. Membrane électrolytique selon la revendication 1, dans laquelle une capacité d'échange d'ions de la résine échangeuse d'ions pour la première couche est de 1,0 à 1,3 méq./g.

4. Membrane électrolytique selon l'une quelconque des revendications 1 à 2, dans laquelle une capacité d'échange d'ions de la résine échangeuse d'ions pour la seconde couche est de 1,15 méq./g ou plus.

5. Membrane électrolytique selon l'une quelconque des revendications 1 à 4, dans laquelle une porosité du corps poreux est de 50 à 95 %, un diamètre moyen des pores du corps poreux est de 0,05 à 10 $\mu$m, et un poids par surface unitaire du corps poreux est de 2 à 20 g/m$^2$.

6. Membrane électrolytique selon l'une quelconque des revendications 1 à 5, dans laquelle le corps poreux est un polytétrafluoroéthylène poreux.

7. Membrane électrolytique selon l'une quelconque des revendications 1 à 6 dans laquelle une épaisseur de la première couche est de 0,1 à 30 $\mu$m, une épaisseur de la seconde couche est de 1 à 50 $\mu$m, et une épaisseur de la membrane électrolytique est de 5 à 100 $\mu$m.

8. Pile à combustible à polymère solide utilisant la membrane électrolytique selon l'une quelconque des revendications 1 à 7.

Fig. 2

EP 1 998 393 B1

Fig. 3

Conditions: 80° C, 100% RH

Cell voltage (V) / Current density (A/cm²)

Fig. 4

Conditions: 80° C, 30% RH

Cell voltage (V) / Current density (A/cm²)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HLL1999501964 A
- JP 2000510510 A
- JP H111999501964 A
- JP 2005511830 A
- JP H10199879257 A
- JP 2005044610 A
- EP 1217680 A
- JP S51197618991 B